# EUROPEAN PATENT SPECIFICATION

(11) **EP 3 742 304 B1**
(45) Date of publication and mention of the grant of the patent: **02.10.2024**
(21) Application number: 19175903.4
(22) Date of filing: 22.05.2019
(51) Int. Cl.: G06F 16/245, G06F 16/2455, G06F 16/2458

(54) **VALIDATION OF MEASUREMENT DATASETS IN A DISTRIBUTED DATABASE**
VALIDIERUNG VON MESSDATENSÄTZEN IN EINER VERTEILTEN DATENBANK
VALIDATION D'ENSEMBLES DE DONNÉES DE MESURE DANS UNE BASE DE DONNÉES RÉPARTIE

(43) Date of publication of application: 25.11.2020
(73) Proprietor: Siemens Aktiengesellschaft, 80333 München (DE)
(72) Inventor: Bölderl-Ermel, Wolfgang, 90530 Wendelstein (DE); Bömoser, Stefan, 91522 Ansbach (DE); Ermler, Rene, 91058 Erlangen (DE); Kepka, Alexander, 90427 Nürnberg (DE); Riedl, Wolfgang, 90443 Nürnberg (DE); Seidl, Joachim, 92237 Sulzbach-Rosenberg (DE)
(74) Representative: Siemens Patent Attorneys

(56) References cited:
- WO-A1-2018/063605
- US-B1- 10 261 846

## Description

### TECHNICAL FIELD

Various examples of the invention generally relate to techniques of validating measurement datasets. Various examples of the invention specifically relate to validating measurement datasets using one or more validation measures implemented at a distributed database, such as a Blockchain.

### TECHNICAL FIELD

Distributed databases - such as the Blockchain - offer increased security against manipulation of data. Thus, various functionality - e.g., sense and control functionality in industrial environments, control of electrical grids, transport systems, etc. - relies on data stored in a distributed database.

Various functionality relying on data stored in the distributed database can be event driven. I.e., one or more functionalities can be triggered by and/or depend on events external to the distributed database, i.e., based on external data. To this end, measurement nodes, sometimes also referred to as oracles, are known. Oracles can provide measurement datasets indicative of one or more observables of an event. Then, the measurement datasets can be stored in the distributed database. Logic functionality can depend on these measurement datasets.

The validity/integrity of measurement datasets can sometimes be compromised. This can be due, e.g., a malfunctioning oracle or fraud. Such limited validity of the measurement datasets can also compromise the integrity of the data stored in the distributed database or any functionality depending on the measurement dataset.

Document US 10,261,846 B1 discloses methods, systems, and computer program products for storing and validating the integrity of event related information. To facilitate auditing and traceability, raw signals, normalized signals, detected events, event expirations, and event notifications can be stored in a queryable distributed ledger (e.g., a blockchain). Personal information can be stripped (or otherwise rendered inert, for example, unrecognizable, unreproducible, etc.) prior to storage into the distributed ledger minimizing the possibility of a person being identified. Ledger data can be used to verify actual data as well as for forensics purposes, such as, to audit data, recreate events, etc., in view of an error or inconsistency to investigate, diagnose, remediate, etc.

### SUMMARY

Accordingly, there is a need for techniques of validating measurement datasets. In particular, there is a need for techniques which overcome or mitigate at least some of the above-identified restrictions and drawbacks.

This need is met by the features of the independent claims. The features of the dependent claims define embodiments.

A mining node of an infrastructure of a distributed database includes a control circuitry. The control circuitry is configured as defined in independent claim 1.

A computer-implemented method at a mining node of an infrastructure of a distributed database includes the step defined in independent claim 12.

Unless explicitly stated otherwise the terms "perform", "calculate", "computer-implemented", "calculate", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory" or "memory unit" or "memory module" or the like can be implemented by a volatile memory in the form of random access memory (RAM) or a non-volatile memory such as a hard disc or data carrier.

The term "include" - specifically with respect to data and/or information - can relate to a (computer-implemented) storing of respective information or the respective date in a data structure/data set (which, e.g., in turn is also stored in a memory unit) in the context of the present disclosure.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the distributed database infrastructure (respectively of the corresponding infrastructure) in the context of the present disclosure.

A "smart contract" or a smart-contract process" or "smart-contract functionality" can refer to the execution of program code, e.g., of a control instruction, in a process by means of the distributed database or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the distributed database. For example, if there is a need for an increased level of security, it would be possible to create and validate checksums on transaction level. For example, if a reduced level of security is required, then it would be possible to create and validate checksums on block level - e.g., across the entire block or only across a part of the data block and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the distributed database infrastructure testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a Blockchain indicates or references to a preceding data block of the Blockchain - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the Blockchain; to thereby chain a new data block with a (existing) data block of the Blockchain. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the Blockchain includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described.

The data - that is, e.g., stored in or written to a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the distributed database, a transaction checksum of a data block of the respective data, e.g., of the distributed database or of another database, or a data checksum determined across the data can be used.

In addition, the respective transaction can optionally include a link to or an indication of a memory position - e.g., an address of a file server and indications where the respective data are to be found on the file server, i.e., pertaining to off-chain storage; or an address of another distributed database which includes the data. The respective data could, e.g., also be provided in a further transaction of a further data block of the Blockchain - e.g., if the respective data and the associated checksums are included in different data blocks. It would also be possible that those data are provided via another communication channel - e.g., via another database and/or a cryptographically-secured communication channel.

In this regard, reading a dataset from a distributed database can generally correspond to reading either the entire dataset from the distributed database, or reading a checksum of the dataset from the distributed database and reading a payload data of the dataset from a non-distributed database.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain.

The term "security protected" can, specifically, relate to a protection that can be implemented by a cryptographic method. For example, this can be implemented by using a distributed database infrastructure for the providing or communication or transmitting of respective data/transactions. This can be implemented by a combination of the various checksums - e.g., cryptographic - , by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a distributed database infrastructure can include chaining of data blocks of a Blockchain. The term "chaining of data blocks" in the connection of the present disclosure can relate to the data blocks respectively including information (such as the chaining checksum) which links to another data block or multiple other data blocks [1], [4], [5].

Insertion of transactions into a distributed database can include saving the transactions in one or more data blocks of the Blockchain.

Insertion of transactions can include validating and/or confirming transactions.

The term "insertion of transactions into the distributed database" or "writing of data to the distributed database" and the like can relate to communicating a transaction or transactions or a data block including the transactions to one or more nodes of a distributed database infrastructure. If those transactions are successfully validated, e.g., by means of the one or more nodes, these transactions can be chained as a new data block with at least one existing data block [1], [4], [5]. For this, the respective transactions are stored in a new data block. In particular, this validating and/or chaining can be implemented by a trusted node, e.g., a mining node, a blockchain oracle or a blockchain platform.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the Blockchain.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving or writing or storing transactions in data blocks", "saving transaction" and the like can relate to a direct saving or indirect saving. A direct saving can relate to the respective data block of the Blockchain or the respective transaction of the Blockchain including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the distribute database".

A "program code" - such as a smart contract - can relate to a program instruction or multiple program instructions which are saved in one or more transactions, in connection with the present disclosure. The program code can be executable and can be executed, e.g., by the distributed database. This can be implemented, e.g., by a runtime environment, e.g., of a virtual machine, wherein the runtime environment or the program code are preferably Turing complete. The program code is preferably executed by the infrastructure of the distributed database [4], [5]. Here, a virtual machine is implemented by the infrastructure of the distributed database. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the distributed database - e.g., a blockchain -, e.g., in a data block. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "distributed database", can generally relate to a decentralized, distributed database, a blockchain, a distributed ledger, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereum-based implementation [1], [4], [5]. The term "distributed database" can also relate to a distributed database infrastructure that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words it is, in particular, not possible to propagate through or visit transactions or blocks or nodes of the graph backwards (i.e., opposite to the common unified direction). Acyclic means, in particular, that there are no loops or ring closures when traversing the graph. For example, a distributed database infrastructure can relate to a public distributed database infrastructure (e.g., a public blockchain) or a closed (private) distributed databased system (e.g., a private blockchain).

For example, in the case of a public distributed database infrastructure, the nodes and/or devices can join the distributed database infrastructure without proof of authorization or authentication or login credentials, respectively be accepted by the distributed database infrastructure without such information. In particular, in such a case the operator of the nodes and/or devices can remain anonymous.

For example, in the case of implementation of the distributed database infrastructure by a closed database system, new nodes and/or devices can require a valid proof of authorization and/or valid authentication information and/or valid credentials and/or valid login information to join the distributed database infrastructure or be accepted by the distribute database infrastructure.

A distributed database infrastructure can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a distributed database - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the distributed database. Thereby, it is possible to implement blockless distributed database infrastructure such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the distribute database, such that they are, in particular, saved in a secured manner. For this the transactions can be chained by means of a chaining checksum, e.g., by using a separate checksum or the transaction checksum of one or more transactions as chaining checksum, which is saved in a new transaction in the distributed database infrastructure when storing the new transaction in the distributed database. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the Blockchain" can relate, in connection with the present disclosure, e.g., to the data block of the Blockchain that is a direct predecessor of the (given) data block. Alternatively, the term "preceding data blocks of a (given) data block of the distribute database" can also relate to all data blocks of the Blockchain that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of an infrastructure of a distributed database", "mining node" and the like can relate, in the context of the present disclosure, to devices - e.g., mobile devices, wireless communication devices, computers, smartphones, clients or participants - that perform operations associated with the distributed database, e.g., a blockchain [1], [4], [5]. Such nodes can, e.g., execute transactions of a distributed database or the respective data blocks or can insert new data blocks including new transactions into the distributed database by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, that can also be nodes of the infrastructure of the distribute database. Thereby, the devices can be mobile devices or devices of the Internet of things, that can also be nodes of the infrastructure of the distributed database. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods - , mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the distributed database infrastructure, i.e., do not execute operations of the distributed database or simply retrieve those without executing transactions, inserting data blocks or calculate proof of works. Alternatively, the term "computer" or "device" can also relate to a node of the infrastructure of the distributed database. In other words, a device can in particular implement a node of the distributed database infrastructure or a device outside of the blockchain and the distributed database, respectively. A device outside of the distributed database infrastructure can, e.g., access the data - e.g., the transactions or the control transactions - of the distributed database. A device outside of the distributed database infrastructure can be controlled by nodes - e.g., by means of smart contracts and/or blockchain oracles. For example, if a control of a device - e.g., a device implemented as a node or a device outside of the distributed database infrastructure - is implemented by a node, then this can occur via a smart contract which, in particular, is saved in a transaction of the distributed database.

### LIST OF CITATIONS

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a system including a Blockchain infrastructure and various nodes such as oracles according to various examples.
FIG. 2 is a flowchart of a method according to various examples.
FIG. 3 is a flowchart of a method according to various examples.
FIG. 4 schematically illustrates a comparison between a first geolocation and a second geolocation according to various examples.
FIG. 5 schematically illustrates a comparison between one or more timestamps and one or more timing constraints according to various examples.
FIG. 6 schematically illustrates a comparison between processed raw data samples of multiple measurement datasets according to various examples.
FIG. 7 is a functional flowchart illustrating the functioning of the system of FIG. 1 according to various examples.
FIG. 8 is a flowchart of a method according to various examples.

### DETAILED DESCRIPTION OF EMBODIMENTS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks and/or boxes, devices, components, or other physical or functional units shown in the drawings or described herein may also be implemented by an indirect connection or coupling. A coupling between components may also be established over a wireless connection. Functional blocks and/or boxes may be implemented in hardware, firmware, software, or a combination thereof.

Hereinafter, techniques are described that facilitate validating measurement datasets provided by oracles. As a general rule, oracles can be implemented by hardware oracles and/or software oracles. A hardware oracle can measure - e.g., using a sensor - one or more physical observables of a physical event. Examples would include measurement of electrical characteristics, e.g., electrical current or electrical voltage, fluid flow or fluid volume, pressure, temperature, operational activity of an industrial machine such as oil change, operating mode, switch on/switch off, etc.; logistics such as dispatch, waypoint passing, delivery, etc. Software oracles can provide measurement data indicative of software-defined events, e.g., website updates, data availability, service downtime, etc.

As a general rule, the measurement dataset can be associated with an industrial field device. More specifically, the measurement dataset can be associated with an event - e.g., a hardware and/or software event - of an operation of the industrial field device. Various kinds of industrial field devices can benefit from the techniques described herein. To give a few examples, industrial field devices such as vehicles such as trains or airplanes or ships, turbines, subsea equipment, medical equipment such as magnetic-resonance imaging or computer tomography, robotic assembly lines, robot manipulators, etc. can benefit from the techniques described herein. The particular kind and type of industrial field device is not germane to the operation of the techniques described herein.

Various examples described herein facilitate validating a given measurement dataset based on a consensus between (i) the given measurement dataset associated with a given event, and (ii) a reference dataset. The reference dataset can provide a cross-check for the measurement dataset. As a general rule, there are various options available for implementing the reference dataset. The reference dataset may be embodied or include a further measurement dataset. For example, the reference dataset may include one or more observables of one or more further measurement datasets, also associated with the same given event. Alternatively or additionally, it would be possible that the reference dataset includes one or more predefined constraints. Thereby, independent or largely independent information on one and the same event and/or the context of the event can be obtained and a respective comparison can be triggered. The comparison between the (i) measurement dataset and the (ii) reference dataset checks for the consensus regarding the observed event. Based on the result of the comparison it would then be possible to trigger or to not trigger (selectively trigger) one or more validation measures for the measurement datasets. These one or more validation measures can be implemented at a distributed database.

Such techniques are based on the finding that by using independent or largely independent measures for one and the same given event - i.e., the measurement dataset and the reference dataset -, it becomes possible to identify malfunctioning or fraud associated with an oracle. Thus, the trust level for the measurement datasets can be increased.

As a general rule, various options are available for implementing the validation measures. To give a few examples, the validation measures can include validating or invalidating the measurement datasets. For example, a variable may be stored in the distributed database, wherein the variable is indicative of the positive or negative result of the comparison. It would also be possible that the variable is indicative of the underlying measurement datasets, i.e., it would be possible that the measurement dataset is selectively stored in the distributed database, depending on the result of the comparison. Further, in case of lack of consensus, it would be possible to inform involved stakeholders accordingly, i.e., one or more nodes that would rely on the measurement dataset.

Various examples are based on the finding that a trust level in the validation measures can be increased if the comparison between (i) a given measurement dataset, and (ii) the reference dataset is implemented at a mining node of a Blockchain infrastructure, i.e., if the logic for the comparison resides at least partly at the Blockchain infrastructure. In particular, an increased trust level can be achieved if compared to reference implementations in which such consensus is checked at a node outside of the Blockchain infrastructure. Typically, nodes of the distributed database infrastructure can have an increased security level if compared to nodes outside of the distributed database infrastructure. Alternatively or additionally, processes implemented by logic residing at a mining node of the distributed database structure can be securely tracked to facilitate a later audit. Manipulation to such logic may be difficult or difficult to conceal. For example, it would be possible that in case of a later check of the validity of the measurement dataset, it is possible to check validity of the metric underlying the comparison for validity. According to various examples, it would also be possible to consider the measurement dataset that has been subject to the comparison, or even underlying raw data samples when checking the validity of the comparison.

According to various examples, the measurement dataset - even though being subject to the comparison at a mining node of the infrastructure of the distributed database - can be digitally signed close to the origin of the underlying raw data samples, e.g., close to or at an oracle. More specifically, in various examples, the measurement dataset may include a digital signature that is determined based on the raw data samples (if compared to a digital signature that is determined on the processed raw data samples). Thus, the validity of the underlying raw data samples is tracked. By means of a measurement dataset including a digital signature, subsequent manipulation of the measurement dataset is prevented. For providing the digital signature, it is possible to use a private-public keying material. Then, the digital signature can be checked for validity based on a public key of the private-public keying material, while the digital signature is created using the private key of the public-private keying material.

Various techniques are based on the finding that for various kinds and types of raw data samples it is possible to determine a performance indicator. The event can be indicative of operational characteristics of an industrial field device. It is possible to determine the performance indicator, wherein the performance indicator specifies one or more figures of merit of the operational characteristics. As such, the performance indicator can correspond to processed raw data samples. The figures of merit can summarize the operation of the industrial field device. The figures of merit can describe abnormalities of the operation. The figures of merit can describe average values of the operational characteristics.

As a general rule, the measurement dataset can include or be implemented by the performance indicator. More specifically, the processed raw data samples included in the measurement dataset can correspond to the performance indicator.

As a general rule, the performance indicator can be determined based on raw data samples, taking into consideration one or more operational constraints associated with the industrial field device. For example, depending on the particular type of industrial field device, different operational constraints can govern which information is significant for the performance of the industrial field device. To give an example: for a stereo camera, dead times in the refresh rate with which images are obtained from the image sensors can be a significant performance indicator; while, on the other hand, for a disc brake of a train car a spectral power density within a certain part of a vibrational spectrum can be a significant performance indicator. In other words, and more generally: the performance indicator can be unique to the type of industrial field device and be associated with the operational characteristics of the industrial field device.

The performance indicator can, typically, include human-understandable application-layer data regarding the operational characteristics of the industrial field device. I.e., processed information that can be directly output via a human-machine-interface may be included in the performance indicator.

As a general rule, the performance indicator can be smaller than the raw data samples. The performance indicator could condense or summarize information generally included in the raw data samples. For example, determining the performance indicator can include applying a low-pass filter, identifying a maximum or minimum, detecting events in the raw data samples, etc.

To give a few examples, the performance indicator could include at least one of the following: time-averaged data samples of the measurement dataset; peak data samples of the measurement dataset; event characteristics of the measurement dataset; or time-averaged use characteristics of the industrial field device.

Various techniques employ a distributed database for storing data associated with industrial field devices. The storage of data in a distributed database may generally be referred to as on-chain storage. In particular, various techniques employ a Blockchain for implementing the distributed database. While various techniques will be described in connection with a scenario in which the distributed database is implemented by a Blockchain, similar techniques may be applied for other kinds and types of distributed databases, e.g., blockless databases, a DLTS, etc. The storing in all such kinds of distributed databases is referred to as on-chain storage, for sake of simplicity (but this is not limited to a Blockchain).

According to various examples, it is possible to facilitate on-chain storage - i.e., storage on the Blockchain or another distributed database - of the measurement dataset. According to various examples, it is possible to facilitate off-chain storage of the raw data samples - i.e., storage on a non-distributed database. The measurement dataset and the raw data samples can be stored in a cross-referenced manner. Since typically the raw data samples are comparably large in size, not having to store the raw data samples on-chain helps to relax computational requirements imposed on the Blockchain infrastructure. At the same time, by storing the performance indicator on-chain, a high security against manipulation can be provided. For example, if the raw data samples were manipulated, this manipulation would most likely also result in a change of the measurement dataset (or else the manipulation would be insignificant). This could help to identify the manipulation by comparing the corresponding raw data samples against the measurement dataset stored on-chain. In particular, it would be possible that the measurement dataset includes a performance indicator; this performance indicator can then be stored on-chain - while the raw data samples can be stored off-chain.

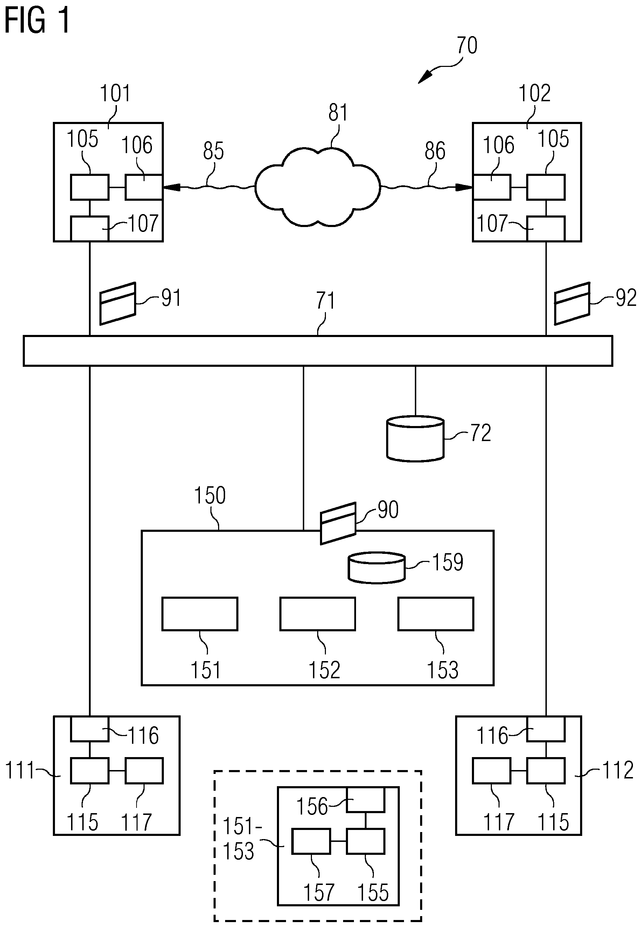

FIG. 1 schematically illustrates a system 70. The system 70 - in the example of FIG. 1 - includes two oracles 101, 102, but could generally include only one oracle or three or more oracles. Each one of the oracles 101, 102 includes a respective control circuitry 105. For example, the control circuitry 105 could include a processor and a non-volatile memory. The processor could load program code from the non-volatile memory and execute the program code to perform various functionality such as: measuring data for a measurement dataset indicative of one or more physical observables of an event; transmitting the measurement dataset; processing raw data of the measurement dataset; triggering a comparison between the measurement dataset and a reference dataset, to thereby validate the measurement dataset; determine a digital signature of the measurement dataset (e.g., of processed raw data samples such as a performance indicator, or even of the raw data samples), e.g. using a public-private cryptographic keying material, etc.

In further detail, as illustrated in FIG. 1, each one of the oracles 101, 102 includes an input interface 106, e.g., a sensor device for a hardware oracle or a communication interface for a software-implemented input interface. The input interfaces 106 of the oracles 101, 102 are configured to measure or determine observables 85, 86 of an event 81.

As a general rule, the event 81 could be a physical event and the observables 85, 86 could be physical observables. It would also be possible that the event 81 is a software event, that the observables 85, 86 would correspond to software observables 85, 86.

The oracles 101, 102 can provide respective measurement dataset 91, 92 to a network 71, e.g., the Internet. The measurement dataset 91 provided by the oracle 101 is indicative of the observable 85 of the event 81; while the measurement dataset 92 provided by the oracle 102 is indicative of the observable 86 of the event 81. In particular, it would be possible that the observable 85 differs from the observable 86. More generally speaking, different oracles can provide measurement datasets that are indicative of different observables. For example, a first oracle could provide measurement datasets indicative of a temperature; while a second oracle provides measurement datasets indicative of pressure, to give just one example. Thereby, independent information and multiple measures of the event 81 can be obtained. This helps to reliably validate the measurement datasets 91, 92.

Sometimes it is not feasible or required to include raw data samples in the measurement datasets 91, 92. Rather, some data compression or data pre-processing may be implemented at the oracles 101, 102, respectively, before transmitting the measurement datasets 91, 92 towards the communication network 71. The measurement datasets 91, 92 can, hence, include processed raw data samples. To give an example, the measurement datasets 91, 92 could include respective performance indicators that are indicative of or correspond to one or more figures of merit of operational characteristics of the event 81.

An advantage of preprocessing the raw data samples - such that the measurement datasets 91, 92 output via the interfaces 107 include the processed raw data samples - lies in reducing the computational resources required downstream of the data processing pipeline, e.g., required at a mining node 151-153 of the Blockchain infrastructure 150 or network resources required at the network 71. For example, fewer computational resources may be required at one of the mining nodes 151-153 to implement a comparison of the respective measurement dataset 91, 92 (including the already processed raw data samples, e.g., the performance indicator) with a respective reference dataset. In particular, as mentioned above, it is possible that the pre-processing of the raw data samples reduces the data size of the measurement datasets 91, 92 if compared to the raw data samples and, e.g., discards redundant or unnecessary information. Therefore, the amount of data that needs to be processed when implementing a comparison of the measurement dataset 91, 92 with a reference dataset is reduced.

As a general rule, raw data samples can correspond to a lower-layer output of a sensor device (in a processing stack including multiple layers); while processed raw data samples can correspond to the raw measurement data after some processing in accordance with a processing algorithm. There can be a tendency that processed raw data samples are smaller if compared to the raw data samples. To give an example: it would be possible that a 2-D stereo camera outputs to 2D images having pixels, each pixel having a certain color or brightness value. Then, the raw data samples can be processed to, e.g., identify objects in the 2-D images using object recognition. The objects could be identified with a bounding box or position label and a category label indicative of the type of the object, e.g., vehicle, person, tree, etc. This can implement the raw data samples. The processed raw data samples could also include distances for the object obtained from a comparison of multiple 2-D images at a given frame. In such a scenario, the processed raw data samples may be significantly smaller if compared to the raw data samples. For example, a list of objects with associated categories and distances may be significantly smaller if compared to the set of pixels (e.g., a few megapixels), each pixel having a n-bit value indicating its brightness, etc. While the examples above have been described in connection with an implementation using a 2-D stereo camera as the source of the measurement dataset, the techniques described herein are not limited to such an example. Various other kinds and types of sources of the measurement dataset are conceivable.

The measurement datasets 91, 92 output via the communication interfaces 107 of the oracles 101, 102 may be digitally signed. The measurement datasets 91, 92 may hence include a digital signature. In some examples, the digital signature may be determined based on the raw data samples, so that the measurement dataset includes the digital signature of the raw data samples. For example, the control circuitry 105 of the oracles 101, 102 may be configured to determine the signature. By determining the signature close to the origin of the raw data samples and/or even based on the raw data samples, e.g., next to the input interface 106, it becomes possible to protect manipulation of the measurement datasets 91, 92. Since the digital signature is determined close to the origin of the raw data samples, i.e., at a point very much upstream of the data processing path, many attack vectors downstream of the data processing path can be mitigated.

In the example of FIG. 1, the communication network 71 is also connected to the Blockchain infrastructure 150. The Blockchain infrastructure 150 includes multiple mining nodes 151-153 that hold and access a Blockchain 159. Each one of the mining nodes 151-153 can attempt to store variables as transactions in the Blockchain 159, i.e., write to the Blockchain 159. For example, a smart contract 90 may be implemented on the Blockchain 159. The smart contract 90 can define self-executable program code; to this end, the mining nodes 151-153 can provide the host environment to execute such program code.

The inset of FIG. 1 also illustrates details with respect to the mining nodes 151-153 of the Blockchain infrastructure 150 (the inset in FIG. 1 is illustrated with the dashed lines). Each one of the mining nodes 151-153 includes a processor 155. The processor 155 can load program code from a memory 157 and can execute the program code. The processor 155 can communicate, via an interface 156, e.g., with the network 71. Each one of the mining nodes 151-153 may store a replica of the Blockchain 159. For example, the processor 155 - upon loading program code from the memory 157 - can be configured to perform one or more of the following: check for consensus between multiple datasets, e.g., by comparing a measurement dataset with a reference dataset; triggering one or more validation measures, e.g., selectively depending on a result of the comparison; check a digital signature of the measurement dataset; process raw data samples to obtain the measurement dataset; etc..

The system 70 also includes stakeholder nodes 111, 112. Each stakeholder nodes 111, 112 includes a processor 115 that can load and execute program code stored by a respective non-volatile memory 117. The stakeholder nodes 111, 112 are connected to the networks 71 via respective interfaces 116. Each one of the stakeholder nodes 111, 112 may be operated by a respective operator. The operators may rely on functionality implemented by, e.g., the smart contract 90 of the Blockchain 159. The operators may rely on the validity of the measurement dataset 91 and/or measurement dataset 92. Therefore, each one of the stakeholder nodes 111-112 is associated with an operator that has an interest in the validation of the measurement dataset 91 and/or the measurement dataset 92.

The system 70 also includes a non-distributed database 72. The non-distributed database 72 is not replicated across multiple nodes. It is different from the Blockchain 159. It can implement off-chain storage.

Next, details with respect to the functioning of the system 70 will be explained in connection with the following FIGs.

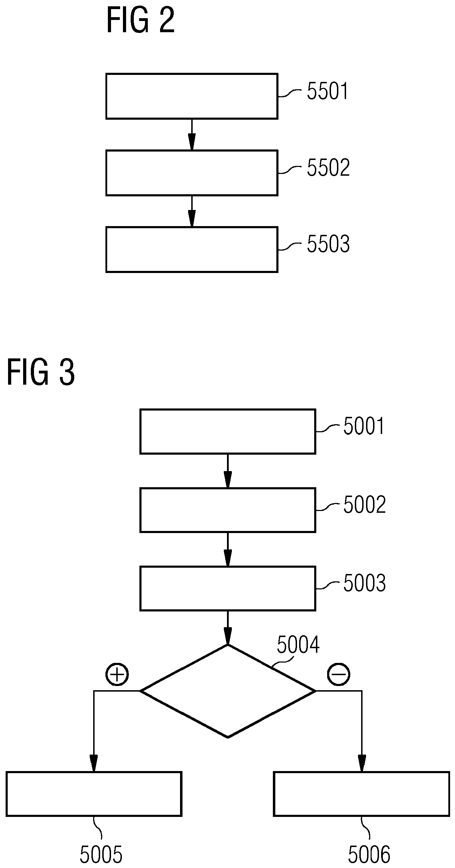

FIG. 2 is a flowchart of a method according to various examples. For example, the method of FIG. 2 could be executed by the oracle 101, e.g., by the processor of the control circuitry 105 loading respective program code from the memory of the control circuitry. It would also be possible that the method according to FIG. 2 is executed by the mining node 151 of the Blockchain infrastructure 150, e.g., by the processor 155 upon loading program code from the memory 157. In some examples, parts of the method according to FIG. 2 could be executed by the oracle 101 and other parts could be executed by the mining node 151.

In box 5501, raw data samples are obtained. The raw data samples are indicative of one or more operational characteristics of an industrial field device. For example, the raw data samples could be received from one or more sensor devices. At least parts of the raw data samples could be obtained from a software oracle.

Next, at box 5502, the raw data samples are processed. As an output of box 5502, a measurement dataset is obtained. As a general rule, various options are available for processing. In some examples, a performance indicator is determined based on the raw data samples. The performance indicator can correspond to one or more figures of merit of the one or more operational characteristics of the industrial field device.

As a general rule, various options are available for determining the performance indicator in box 5502. To give an example, it would be possible that the performance indicator is determined using a performance metric algorithm. The performance metric algorithm can transform the raw data samples into the performance indicator. For example, the performance metric algorithm can be unique to the particular industrial field device or type of industrial field device. The performance metric algorithm can reduce the amount of data such that the data size of the measurement dataset including performance indicator is smaller than the data size of the raw measurement samples.

In box 5503, storage of the measurement dataset including the processed raw data samples, is triggered. The measurement dataset can be stored in a distributed database, e.g., the Blockchain 159. Triggering storage in box 5503 can include, e.g., transmitting the measurement dataset to the Blockchain infrastructure 150, e.g., to an appropriate mining node and requesting storage in the Blockchain 159.

FIG. 3 is a flowchart of a method according to various examples. The method of FIG. 3 may be executed by the processor 155 of one of the mining nodes 151-153, upon loading respective program code from the memory 157.

At box 5001, a measurement dataset is obtained. For example, the measurement dataset can be obtained from an oracle such as the oracle 101.

According to some examples, box 5001 can include (pre-)processing raw data samples. This an correspond to or include techniques as explained with reference to box 5502 above (cf.: FIG. 2). The raw data samples may be received from an oracle, e.g., the oracle 101. As a general rule, the processing at box 5001 could be implemented by a smart contract, e.g., the smart contract 90.

According to various examples, such processing of the raw data samples at box 5001 could be based on a predefined algorithm. Sometimes, this algorithm can have an associated validity time duration. For instance, the algorithm may be agreed upon by the operators of the stakeholder nodes 111, 112. A corresponding agreement may define the validity time duration. In such a scenario, it would be possible that the processing of the raw data samples, in box 5001, is selectively executed, if one or more timestamps of the raw data samples are in accordance with the validity time duration of the predefined algorithm. For example, it can be checked whether the timestamps of the raw data samples are within the validity time duration. This helps to avoid using an outdated algorithm for the processing. This can be of help in scenarios in which over the course of times different algorithms or different parameters of an algorithm are agreed upon by the stakeholders.

Then, the measurement dataset can be associated with a timestamp of the processing at box 5001. Alternatively or additionally, it would also be possible to associate the measurement dataset that is obtained from box 5001 with an indicator indicative of the predefined algorithm and/or the validity time duration of the predefined algorithm. By such techniques, it becomes possible to facilitate a subsequent audit/validity check of the processing at box 5001. In particular, it can be checked whether the appropriate algorithm has been used. This can be of help in scenarios in which over the course of times different algorithms or different parameters of an algorithm are agreed upon by the stakeholders.

At box 5002, a reference dataset is obtained. For example, a further measurement dataset may be obtained. The further measurement dataset is indicative of one or more further observables of the event, i.e., the same event for which at box 5001 the measurement data is obtained. The further measurement data is provided by a further oracle. For example, the measurement dataset 92 could be obtained from the oracle 102, wherein the measurement dataset 92 is indicative of the observable 86 of the event 81 (cf. FIG. 1).

Alternatively or additionally to the further measurement dataset, it would also be possible to obtain one or more constraints associated with the event.

Next, at box 5003, a comparison between the measurement dataset - obtained at box 5001 - and the reference dataset - obtained at box 5003 - is performed. Box 5003 could include sending a trigger or request message to execute the comparison. Box 5003 could also include executing the comparison locally, e.g., at the respective mining node 151-153. For example, box 5003 could include invoking a corresponding function of a smart contract of a Blockchain, e.g., invoking a corresponding function of the smart contract 90 of the Blockchain 159 (cf. FIG. 1). In such a scenario, the comparison, in other words, is provided by a smart contract. The comparison checks for consensus between the measurement dataset of box 5001 and the reference dataset of box 5002.

As a general rule, various options are available for implementing the comparison at box 5003. The comparison can vary along with the type of measurement dataset and, more specifically, with the type of observables indicated by the measurement datasets obtained in box 5001. To give an example, it would be possible that the comparison is based on a predefined agreement indicative of a metric of the comparison. The metric can define a ruleset for comparing the various involved datasets. In particular, using an appropriate metric, it is even possible to compare different observables, e.g., temperature with pressure, or operational statistics of a field device with current consumption, to give just a few examples. In some examples, the comparison could be implemented by a machine-learning algorithm that is trained to detect abnormalities in the behavior of the multiple physical observables. In other examples, a predefined rule set could be analytically defined.

For example, a tolerance range could be defined by the metric. The tolerance range may specify certain acceptable ranges of deviation between the measurement dataset and the reference dataset.

According to various examples, it would be possible that the metric used for implementing the comparison at box 5003 has a validity time duration. The validity time duration of the metric of the comparison used at box 5003 can be comparable with the validity time duration of the processing algorithm of the processing at box 5001. For example, it would again be possible to check whether one or more timestamps associated with the measurement dataset and/or associated with the reference dataset subject to the comparison are in accordance with the validity time duration of the metric. This prevents an outdated metric to be applied to the measurement dataset and the reference dataset to perform the comparison. For example, the stakeholders may (re-)negotiate or change the metric from time to time. In particular in scenarios in which the comparison in box 5003 is implemented by a smart contract, it can then be helpful to check whether the timestamp or timestamps of the measurement dataset and/or the reference dataset are in accordance with the validity time duration. For example, the appropriate smart contract or the appropriate function of the smart contract implementing the comparison may be selected in accordance with the timestamp or timestamps and in accordance with the validity time durations associated with the smart contracts or functions of the smart contract. Sometimes, in scenarios in which the comparison is implemented by a smart contract, the smart contract cannot be simply removed from the Blockchain without affecting the integrity of the Blockchain. Thus, by implementing the check for the validity time period, the smart contract (or, more specifically, a transaction or block including the smart contract) can remain in the Blockchain; but cannot be used to perform the comparison after expiry of the validity time period.

Furthermore, a result of the comparison can be stored in the distributed database, along with a timestamp of the comparison and the metric or more specifically the validity time duration of the metric. Then, a subsequent check becomes possible whether the appropriate valid metric has been applied to implement the comparison.

In some examples, a scenario may occur in which it is detected, at box 5003, that the validity time duration of the metric has expired. Upon expiry of the validity time duration, it would be possible to trigger a re-negotiation of the metric between the stakeholder nodes 111-112, e.g., by transmitting to the stakeholder nodes 111-112 a corresponding request. Thereby, it can be continuously ensured that a valid and up-to-date metric is employed for implementing the comparison at box 5003.

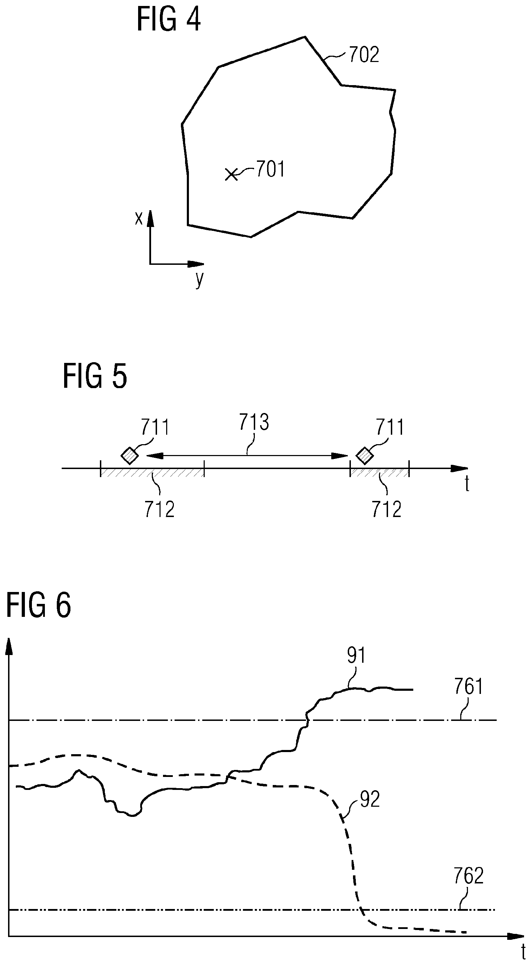

Next, a few examples are given for example implementations of the reference dataset being indicative of one or more predefined constraints associated with the event. For example, it would be possible that the constraints are a location-based. To give an example, the measurement dataset may include a first geolocation and the one or more predefined constraints may include a second geolocation. Referring to FIG. 4: for example, the first geolocation associated with the measurement dataset may define a latitude and longitude of a position of the corresponding oracle. The second geolocation 702 may define a geo-fence or geo-area. The comparison at box 5003 (cf. FIG. 3) can then be based on a spatial distance between the first geolocation 701 and the second geolocation 702. In the example of FIG. 4, the latitude and longitude of the first geolocation 701 is within the geo-fence of the second geolocation 702, thereby the spatial distance between the first geolocation 701 and the second geolocation 702 is zero. Accordingly, the comparison at box 5003 (cf. FIG. 3) can yield a positive result.

In a further example, it would be possible that the comparison considers time domain parameters. Such an example is illustrated in FIG. 5. In FIG. 5, the measurement dataset includes multiple timestamps 711 that are, e.g., associated with the underlying raw data samples. For example, the timestamps could be indicative of a time of occurrence of the event. FIG. 5 also illustrates that the one or more predefined constraints of the reference dataset may include timing constraints 712. In the example of FIG. 5, the timing constraints 712 relate to time windows during which an event is allowed / expected to occur, by definition. The comparison in box 5003 can then be based on the time-domain distance between the one or more timestamps 711 and the timing constraints 712. In the scenario of FIG. 5, the timestamp 711 indicate a time that is within the timing windows of the timing constraints 712 and, accordingly, the distance is 0. Accordingly, the comparison at box 5003 yields a positive result.

Such an implementation of the timing constraint using a time window is illustrated in FIG. 5 is an example only. Other examples are conceivable. For example, the timing constraint could define a threshold repetition rate. The threshold repetition rate can define an upper limit for the repetitions of the event as indicated by the measurement dataset. In FIG. 5, the associated repetition rate 713 between the timestamp 711 indicative of the occurrence of the event is indicated. For example, this measurement repetition rate 713 could then be compared against the threshold repetition rate.

It is not required in all scenarios to use an implementation of the reference dataset that relies on one or more predefined constraints. As mentioned above, it would also be possible to implement the comparison at box 5003 based on a consensus between multiple measurement datasets 91, 92. Such a scenario is illustrated in FIG. 6. In FIG. 6, the measurement datasets 91, 92 include a time series of data points. The data points can correspond to processed raw data samples, e.g., low-pass filtered raw data samples, etc.. For example, the data samples of the measurement dataset 91 could indicate pressure and the data samples of the measurement dataset 92 could indicate fluid flow. As illustrated in FIG. 6, at some point in time the pressure as indicated by the measurement dataset 91 rises above a predefined threshold 761; while the fluid flow of the measurement dataset 92 falls below another predefined threshold 762. The comparison can check whether at the associated point in time both criteria are fulfilled (i.e., the pressure indicated by the measurement dataset 91 rising above the threshold 761 and the fluid flow rate indicated by the measurement dataset 92 falling below the threshold 762), to validate the event clogging/occlusion of a fluid flow path of an associated industrial field device. The metric can define a corresponding ruleset, e.g., using Boolean logic, etc.. The metric could define the threshold 761, 762.

As will be appreciated from the description of FIGs. 4-6, various options are available for implementing, at box 5003, the comparison.

Turning again to FIG. 3, at box 5004, a result of the comparison of box 5003 is checked. Depending on the result of the comparison, one or more - positive or negative - validation measures are selectively triggered at boxes 5005 or 5006, respectively. The one or more validation measures pertain to the measurement dataset. In particular, the one or more validation measures can be implemented at the Blockchain, e.g., at the Blockchain 159.

In detail, if at box 5004 it is judged that the comparison yields a positive result, i.e., a (cross-)validation of the measurement dataset and the reference dataset is positively obtained, then a positive validation measure is taken at box 5005; otherwise, a negative validation measure is taken at box 5006. The positive validation is measure is thus selectively executed in case the comparison yields a positive result.

As a general rule, various options are available for implementing positive and negative validation measures, e.g., in connection with boxes 5005 and 5006. To give just a few examples, a positive validation measure that could be taken as part of executing box 5005 could pertain to storing the measurement data in the Blockchain, e.g., in the Blockchain 159. It would also be possible that a flag indicator is appropriately set, the flag indicator being stored in the Blockchain, e.g., the Blockchain 159. The flag indicator could indicate whether a (cross-)validation was successful or not. Yet another validation measure may include transmitting a corresponding report message to at least one of the stakeholder nodes 111, 112. Thereby, parties interested in the validation can be appropriately informed.

In case the comparison yields a negative result, it would be possible to trigger, as part of execution of box 5006, a settlement process. The settlement process includes a predefined rule set or workflow for the case of a deviation between the first measurement dataset and the second measurement dataset. The settlement is associated with a trust level of the first oracle providing the first measurement dataset (cf. oracle 101 in FIG. 1) and/or the trust level of the second oracle providing the second measurement dataset (cf. oracle 102 in FIG. 1). Then, if there are deviations between the first measurement dataset and the second measurement dataset, the particular measurement dataset may prevail that has the larger associated trust level. The stakeholder nodes 111, 112 could be informed as part of box 5006.

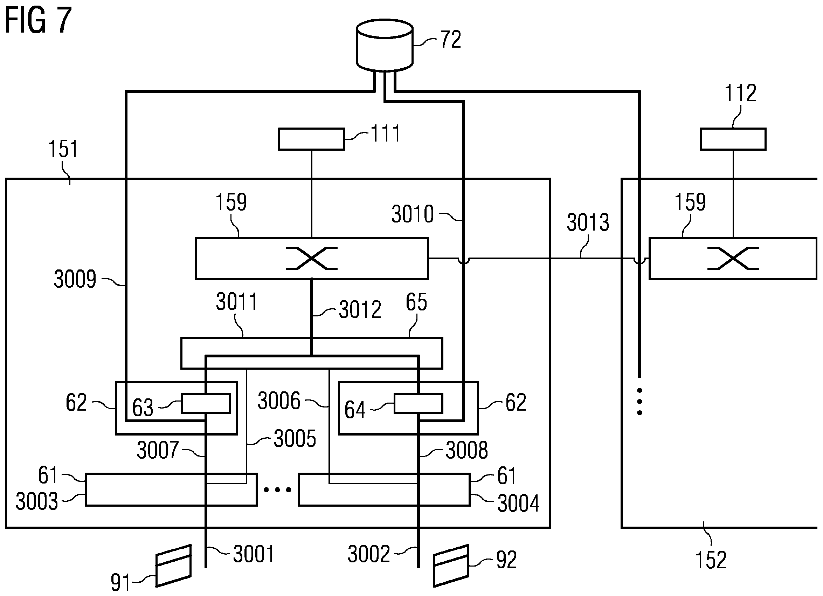

FIG. 7 is a functional flowchart illustrating the operation and functions of the system 70. In particular, FIG. 7 illustrates details with respect to the operation of the mining node 151 of the Blockchain infrastructure 150.

At 3001, the mining node 151 receives - e.g., via the respective interface 156 - the first measurement dataset 91. For example, the communication could be via a wide area network or a wired communication line (cf. FIG. 1, network 71). It would also be possible that the communication includes wireless transmission. To facilitate the communication, it would be possible that the corresponding oracle 101 is registered at the Blockchain infrastructure 150. More specifically, it would be possible that the oracle 101 is registered at the mining node 151. Respective unique credentials may be used.

Also, the oracle 102 is registered at the mining node 151. Accordingly, at 3002, the mining node 151 receives the measurement dataset 92.

As illustrated in FIG. 7, accordingly, the mining node 151 obtains the measurement dataset 91 that is indicative of one or more observables 85 of an event 81 and, furthermore, obtains the measurement dataset 92 that is indicative of one or more further observables 86 of the event 81. As a general rule, while in the scenario of FIG. 7 the mining node 151 receives the multiple measurement datasets 91, 92, in other examples, it would also be possible that the mining node only receives a single measurement dataset - e.g., the measurement dataset 91 - and, furthermore, receives a reference dataset that comprises one or more predefined constraints associated with the event 81 (this scenario is not illustrated in FIG. 7) .

Next, at 3003, the measurement dataset 91 is fed to a smart contract 61 (more specifically, a respective instance of the smart contract 61, e.g., defined by a respective function call) and, at 3004, the measurement dataset 92 is fed to a further instance of the smart contract 61. Here, a switch point functionality is implemented. In particular, the smart contract 61 can check whether the respective measurement dataset 91, 92 includes processed raw data samples, or rather includes (non-processed) raw data samples. The raw data samples can be original non-preprocessed outputs of the respective sensor device. Processed data samples, on the other hand, have been processed with a respective processing algorithm, e.g., to condense information to some smaller or larger degree. In the various examples described herein, it would be possible that the processed raw data samples correspond to a performance indicator, the performance indicator including one or more figures of merit of operational characteristics of the associated industrial field device. The event 81 can correspond to or be associated with these operational characteristics.

The switch point functionality implemented by the smart contract 61 thus check whether the respective measurement dataset 91, 92 includes raw data samples or processed raw data samples. In case the measurement dataset 91, 92 includes processed raw data samples, these are forwarded to a further smart contract 65 at 3005 and 3006, respectively. On the other hand, raw data samples are forwarded, at 3007 and 3008 to respective instances of a smart contract 62. The smart contract 62 implements the processing of the raw data samples.

As a general rule, each one of the smart contracts 61, 62, 65 can be associated with a validity time duration. The validity time duration can be indicative of an expiry time of the respective smart contract 61, 62, 65. This makes it possible to implement a check whether one or more timestamps of the respective input data is in accordance with the validity time duration. If not, there can be a check made whether an updated smart contract is existent that has another validity time duration. Furthermore, it becomes possible to later on check whether the appropriate smart contract has been used in order to implement the various functionality. For example, an identity of the respectively executed smart contract may be stored in the Blockchain 159, to facilitate such audit. The measurement datasets 91, 92, and/or the reference dataset may also include timestamps that can be compared against the validity time duration.

As a general rule, the measurement datasets 91 and/or 92 may include an identity of the respective sensor device.

As a further general rule, the measurement datasets 91 and/or 92 may include a geolocation of the respective sensor device, e.g., latitude and longitude.

As a further general rule, it would be possible that the measurement datasets 91 and/or 92 may include a respective configuration dataset that is indicative of a processing algorithm used for (pre-)processing raw data samples, in case the measurement datasets 91, 92 include the already preprocess raw data samples.

As a still further rule, it would be possible that the measurement datasets 91 and/or 92 include a respective digital signature. For example, the digital signature can be determined based on a private key of a public-private cryptographic keying material. In some examples, the digital signature is determined based on the raw data samples.

Next, the function of the smart contract 62 is explained in further detail. The smart contract 62 implements logic to process the raw data samples. The smart contract 62 also implements logic to trigger storage of the raw data samples in the non-distributed database 72. In particular, at 3009 and 3010, the raw data samples are transmitted to the non-distributed database 72, e.g., with a respective right command. Again, the smart contract 62 can implement switch point functionality.

Corresponding functions 63, 64 of the smart contract 62 can be used to process the raw data samples. This can be in accordance with a predefined algorithm. The predefined algorithm can have an associated validity time duration. The validity time duration can be compared against timestamps of the raw data samples to check whether the appropriate function 63, 64 - e.g., as agreed upon by the stakeholders - is used. Such processing implemented at the Blockchain infrastructure 150 has the advantage that a higher level of trust can be provided, e.g., in connection with the employed algorithm for processing. On the other hand, certain limitations associated with the required computational resources and/or the communication network 71 may have to be observed. In this regard, as will be appreciated from FIG. 7, the smart contract 62 is only invoked in case raw data samples are included in the measurement datasets 91, 92; otherwise, the execution of the smart contract 62 is bypassed at 3005 and 3006. Such bypassing can reduce the required computational resources such as bandwidth and data traffic on the network 71 and processing/memory resources at the mining node 151.

According to various examples, it is possible that the validity time duration of any one of the smart contracts 61, 62, 65 is defined by two timestamps that define the start time of the validity time duration and the stop time of the validity time duration. Thereby, it can be possible to determine a time domain distance between a respective timestamp of the measurement datasets 91, 92 and the validity time duration. It can be checked whether the valid smart contract 61-62, 65 is used. It is also possible to implement a check whether the appropriate smart contract 61-62, 65 has been used at a later point in time.

Next, details with respect to the smart contract 65 executed at 3011 are explained. To create a high degree of trust, the validation of the measurement dataset 91 and optionally of the measurement dataset 92, e.g., by executing the appropriate validation measure at box 5005 (cf. FIG. 3), should be based on a consensus between multiple independent data sources. In particular, it would be possible to rely on the measurement datasets 91, 92 that are obtained from different oracles 101, 102. According to various examples, it would be possible that the oracles 101, 102 are operated by different stakeholders. For example, the observable 85 can relate to a variable power input to a pump as industrial field device; the observable 86 can relate to the fluid flow rate of the pump. Other examples of observables may include a change of mass or volume of an chemical additive that is added to the fluid handled by the pump. Then, an occlusion/clogging of a fluid flow path of the fluid handled by the pump could be associated with the following observables: the observable 85 indicates that the input power exceeds a certain threshold; the observable 86 indicates that the fluid flow rate falls below a certain threshold; and a further observable associated with the mass or volume of the chemical additive can indicate that there is no consumption of the chemical additive.

Such correlations etc. can be considered in a metric for comparing the various measurement datasets used at the smart contract 65 to implement the comparison. To give an explicit example:
IF "maximum input power" AN "no flow rate" AND "no consumption of chemical additives" AND "timestamps of the various observables having a time domain distance below a threshold", THEN "event equals occlusion/clogging" at time "timestamp".

Based on such consensus between the multiple observables of the same event, an attack vector of manipulating individual oracles is essentially prevented, because a successful attack would have to manipulate all data sources.

While in the example explained above multiple measurement datasets have been used, it is generally possible to implement the comparison between a single measurement dataset and one or more predefined constraints. An example predefined constraint could be defined in time domain. For example, here, only the measurement dataset 91 could be obtained. A timing constraint could include a threshold repetition rate. For example, it could be specified that the event "occlusion/clogging" can only occur once a week. Alternatively or additionally, the timing constraint can include timing windows. For example, it could be defined that the event "occlusion/clogging" only occurs in the morning or in the evening. Here, even when operating based on a single measurement dataset, it becomes possible to implement a meaningful comparison.

Instead of such time domain constraints, it would also be possible to use spatial domain constraints. For example, geo-information such as a latitude/longitude from a GPS receiver/GPS device could be used. Here, the oracle 101 may provide the measurement dataset 91 (optionally, its identity in the timestamp), as well its geolocation. All such information can be included in the digital signature. Then, the mining node 151 can implement the comparison based on the geo-location of the oracle 101 and a predefined reference geolocation.

As a general rule, the reference dataset, in particular when including the one or more predefined constraints, can be obtained from the non-distributed database 72. Alternatively or additionally, the reference dataset could also be stored in the Blockchain, e.g., associated with a smart contract.

In case of a positive result of the comparison, at 3012, the measurement dataset 91 and/or the measurement dataset 92, or more specifically the processed raw data samples, can be stored in the Blockchain 159 (cf. FIG. 3: box 5005). As illustrated in FIG. 7, the Blockchain 159 is then replicated, at 3013, between the various mining nodes 151-152 of the Blockchain infrastructure 150. The stakeholder nodes 111-112 can access the respective mining nodes 151-152.

As mentioned above, the various smart contracts, in particular the smart contract 65, may be associated with a validity time duration. Upon expiry of the validity time duration, it would be possible to trigger a re-negotiation of the metric used for the comparison at the smart contract 65 between the various stakeholder nodes 111-112. For example, such changes in the metric may occur if the stakeholders agree that certain criteria used in the metric for the comparison are to strict or to relaxed. Once the respective smart contract 65 has been updated, the corresponding transaction included in the Blockchain 159 including the new smart contract 65 is synchronized between the various mining nodes 151-152 of the Blockchain infrastructure 150. The validity time duration is updated. Also, it can be possible to update the upstream smart contracts 61, 62, such that they invoke the correct, updated version of the smart contract 65. Also, the smart contract 61, 62 may be equipped with logic to autonomously identify the appropriate version of the smart contract 65, e.g., based on a comparison between the timestamps included in the measurement datasets 91, 92 and the validity time duration indicated by a variable in the smart contract 65.

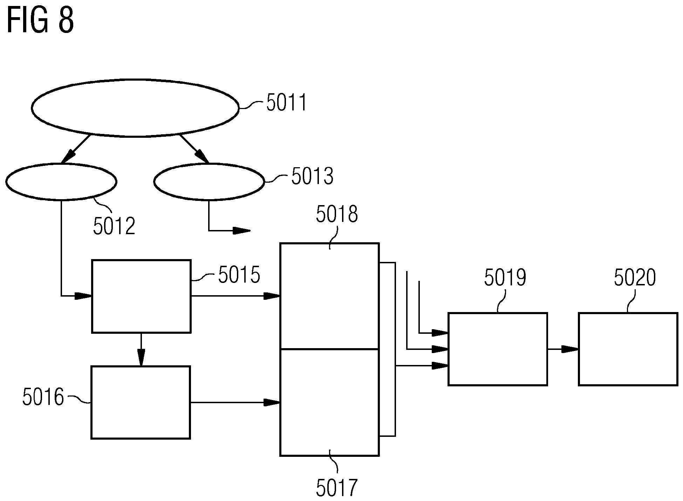

FIG. 8 is a flowchart of a method according to various examples.

At box 5011, the oracle 101 registers at the mining node 151 and the oracle 102 registers at the mining node 151.

At box 5012, the oracle 101 provides the measurement dataset 91 to the mining node 151. At box 5013, the oracle 102 provides the measurement dataset 92 to the mining node 151.

Boxes 5015-5017 are now only illustrated in connection with the measurement dataset 91 provided at box 5012; but similar boxes could also be executed for the measurement dataset 92 provided at 5013 (not illustrated in FIG. 8).

At box 5015, it is checked whether the measurement dataset 91 obtained at box 5012 includes raw data samples or processed raw data samples. In case the measurement dataset 91 includes raw data samples, then the method continues at box 5016. Here, the raw data samples are processed to obtain the processed raw data samples. It is also possible to trigger storage of the raw data samples in the non-distributed database 72.

The processing of the raw data samples in box 5016 can be based on a predefined algorithm. In particular, the processing can be selectively executed if one or more timestamps of the raw data samples are in accordance with a validity time duration of the predefined algorithm. It would be possible that the predefined algorithm is stored in the Blockchain 159. It would also be possible that an indicator indicative of the validity time duration of the predefined algorithm is stored in the Blockchain 159. Also, the timestamps of the raw data samples or at least a derived timestamp of the measurement dataset can be stored in the Blockchain 159.

At box 5017, it is checked whether a predefined agreement positively confirms that the various stakeholders have agreed upon processing the raw data samples at the Blockchain infrastructure 150 (i.e., if the box 5016 has been legitimately executed).

If, at box 5015 it is determined that the measurement dataset 91 includes processed raw data samples (instead of raw data samples), then box 5018 is executed. At box 5018 it is checked whether the various stakeholders have agreed upon processing the raw data samples outside of the Blockchain, i.e., upstream in the data processing flow.

In case the check at box 5017 or the check at box 5018 is successful, the method commences at box 5019.

Box 5019 obtains, as an input, the various processed raw data samples of the measurement datasets 91, 92. At box 5019, a comparison between the multiple measurement datasets - or, more generally, between a measurement dataset and a reference dataset - is implemented.

At box 5020, if a positive result of the comparison of box 5019 is reached - one or more positive validation measures are implemented. For example, one or more measurement datasets may be stored in the Blockchain 159. It would also be possible that the result of the comparison of box 5019 is stored in the Blockchain 159. Box 5020 can include writing respective data into a transaction and chaining the transaction in a new block of the Blockchain. The Blockchain can be synchronized and replicated across multiple mining nodes 151-153.

Summarizing, techniques have been described which facilitate implementing a comparison between a measurement dataset in the reference dataset in a Blockchain infrastructure. This helps to implement a validity check in a manner that can be audited by various stakeholders. The comparison is transparent and can be reconstructed at a later point in time.

Although the invention has been shown and described with respect to certain preferred embodiments, modifications will occur to others skilled in the art upon the reading and understanding of the specification. The present invention includes all such modifications and is limited only by the scope of the appended claims.

For illustration, while various examples have been described in connection with determining a performance indicator based on raw data samples, in other examples other types of processing of raw data samples would be conceivable.

## Claims

1. A mining node (151-153) of an infrastructure (150) of a distributed database (159), the mining node (151-153) comprising a control circuitry (155-157) configured to:
- obtain (5001) a measurement dataset (91) provided by a first oracle (101) indicative of one or more observables (85) of an event (81), the measurement dataset (91) comprising processed raw data samples,
- perform (5003) a comparison between the measurement dataset and a reference dataset, the reference dataset comprising at least one of one or more predefined constraints (702, 711, 712) associated with the event (81) or a further measurement dataset (92) provided by a second oracle (102) that is indicative of one or more further observables (86) of the event (81), and
- depending on a result of the comparison:
if the comparison yields a positive result, triggering one or more positive validation measures (5005) for the measurement dataset (91),
if the comparison yields a negative result, triggering one or more negative validation measures (5006) for the measurement dataset (91), wherein triggering the one or more negative validation measures (5006) includes triggering a settlement process, the settlement process being based on a trust level of the first oracle (101) and on a trust level of the second oracle (102),
wherein the one or more positive validation measures (5005) and the one or more negative validation measures (5006) are implemented at the distributed database.

2. The mining node of claim 1,
wherein the measurement dataset comprises a first geolocation (701),
wherein the one or more predefined constraints comprise a second geolocation (702),
wherein the comparison is based on a spatial distance between the first geolocation and the second geolocation.

3. The mining node of claim 1 or 2,
wherein the measurement dataset comprises one or more timestamps (711),
wherein the one or more predefined constraints comprise a timing constraint (712, 73),
wherein the comparison is based on a time-domain distance between the one or more timestamps and the timing constraint.

4. The mining node of claim 3,
wherein the timing constraint comprises a threshold repetition rate of the event.

5. The mining node of any one of the preceding claims, wherein the control circuitry is further configured to:
- receive raw data samples from an oracle (101), and
- process the raw data samples, to obtain the measurement dataset including the processed raw data samples.

6. The mining node of claim 5,
wherein said processing is based on a predefined algorithm having a validity time duration,
wherein the raw data samples are selectively processed if one or more timestamps of the raw data samples are in accordance with the validity time duration of the predefined algorithm,
wherein the measurement dataset is optionally associated with at least one of a timestamp of said processing, or an indicator indicative of the predefined algorithm, or the validity time duration of the predefined algorithm.

7. The mining node of any one of the preceding claims,
wherein the event is associated with one or more operational characteristics of an industrial field device,
wherein the processed raw data samples correspond to one or more figures of merit of the one or more operational characteristics.

8. The mining node of any one of preceding claims, wherein the control circuitry is further configured to:
- trigger storage of the raw data samples in a non-distributed database.

9. The mining node of any one of the preceding claims, wherein the comparison is based on a predefined metric having a validity time duration,
wherein the one or more validation measures comprise storing the result of the comparison in the distributed database and storing a timestamp of the comparison in the distributed database and storing the predefined metric in the distributed database.

10. The mining node of claim 9, wherein the control circuitry is further configured to:
- upon expiry of the validity time duration of the predefined metric, trigger a re-negotiation of the predefined metric between multiple stakeholder nodes.

11. The mining node of any one of the preceding claims,
wherein the measurement dataset comprises a digital signature of the raw data samples.

12. A computer-implemented method executed by a mining node (151-153) of an infrastructure (150) of a distributed database (159), the method comprising:
- obtaining a measurement dataset (91) provided by a first oracle (101) indicative of one or more observables (85) of an event (81), the measurement dataset (91) comprising processed raw data samples,
- performing a comparison between the measurement dataset and a reference dataset, the reference dataset comprising at least one of one or more predefined constraints (702, 711, 712) associated with the event (81) or a further measurement dataset (92) provided by a second oracle (102) that is indicative of one or more further observables (86) of the event (81), and
- depending on a result of the comparison:
if the comparison yields a positive result, triggering one or more positive validation measures (5005) for the measurement dataset (91),
if the comparison yields a negative result, triggering one or more negative validation measures (5006) for the measurement dataset (91), wherein triggering the one or more negative validation measures (5006) includes triggering a settlement process, the settlement process being based on a trust level of the first oracle (101) and on a trust level of the second oracle (102),
wherein the one or more positive validation measures (5005) and the one or more negative validation measure (5006) are implemented at the distributed database.

13. The method of claim 12, wherein the method is executed by the mining node of any one of claims 1 to 11.

## Patentansprüche

1. Mining-Knoten (151-153) einer Infrastruktur (150) einer verteilten Datenbank (159), der Steuerelektronik (155-157) umfasst, die so konfiguriert ist, dass sie:
- einen von einem ersten Oracle (101) bereitgestellten Messdatensatz (91) abruft (5001), der ein oder mehrere Observables (85) zu einem Ereignis (81) angibt, wobei der Messdatensatz (91) verarbeitete Rohdatenstichproben umfasst,
- einen Vergleich zwischen dem Messdatensatz und einem Referenzdatensatz durchführt (5003), wobei der Referenzdatensatz einen oder mehrere mit dem Ereignis (81) verknüpfte, vorgegebene Constraints (702, 711, 712) und/oder einen von einem zweiten Oracle (102) bereitgestellten, weiteren Messdatensatz (92) umfasst, der ein oder mehrere weitere Observables (86) zu dem Ereignis (81) angibt, und
- in Abhängigkeit vom Ergebnis des Vergleichs:
eine oder mehrere positive Validierungsmaßnahmen (5005) für den Messdatensatz (91) auslöst, wenn der Vergleich ein positives Ergebnis erbringt,
eine oder mehrere negative Validierungsmaßnahmen (5006) für den Messdatensatz (91) auslöst, wenn der Vergleich ein negatives Ergebnis erbringt, wobei das Auslösen der einen oder der mehreren Validierungsmaßnahmen (5006) das Auslösen eines Bereinigungsprozesses umfasst, der auf einer Vertrauensstufe des ersten Oracle (101) und einer Vertrauensstufe des zweiten Oracle (102) basiert,
wobei die eine oder die mehreren positiven Validierungsmaßnahmen (5005) und die eine oder die mehreren negativen Validierungsmaßnahmen (5006) in der verteilten Datenbank implementiert werden.

2. Mining-Knoten nach Anspruch 1,
wobei der Messdatensatz einen ersten geografischen Standort (701) umfasst,
wobei der eine oder die mehreren vorgegebenen Constraints einen zweiten geografischen Standort (702) umfassen,
wobei der Vergleich auf einem räumlichen Abstand zwischen dem ersten und dem zweiten geografischen Standort basiert.

3. Mining-Knoten nach Anspruch 1 oder 2,
wobei der Messdatensatz einen oder mehrere Zeitstempel (711) umfasst,
wobei der eine oder die mehreren vorgegebenen Constraints einen zeitbezogenen Constraint (712, 73) umfassen,
wobei der Vergleich auf einem Zeitbereichsabstand zwischen dem einen oder den mehreren Zeitstempeln und dem zeitbezogenen Constraint basiert.

4. Mining-Knoten nach Anspruch 3,
wobei der zeitbezogene Constraint einen Grenzwert für die Wiederholfrequenz des Ereignisses umfasst.

5. Mining-Knoten nach einem der vorhergehenden Ansprüche, wobei die Steuerelektronik ferner so konfiguriert ist, dass sie:
- Rohdatenstichproben von einem Oracle (101) empfängt und
- die Rohdatenstichproben verarbeitet und so den Messdatensatz einschließlich der verarbeiteten Rohdatenstichproben erhält.

6. Mining-Knoten nach Anspruch 5,
wobei die Verarbeitung auf einem vordefinierten Algorithmus mit einer Gültigkeitsdauer basiert,
wobei die Rohdatenstichproben gezielt verarbeitet werden, wenn ein oder mehrere Zeitstempel der Rohdatenstichproben der Gültigkeitsdauer des vordefinierten Algorithmus entsprechen,
wobei der Messdatensatz wahlweise mit einem Verarbeitungszeitstempel und/oder einem den vordefinierten Algorithmus angebenden Indikator und/oder der Gültigkeitsdauer des vordefinierten Algorithmus verknüpft ist.

7. Mining-Knoten nach einem der vorhergehenden Ansprüche,
wobei das Ereignis mit einem oder mehreren Betriebsmerkmalen eines industriellen Feldgeräts verknüpft ist,
wobei die verarbeiteten Rohdatenstichproben einer oder mehreren Leistungszahlen des einen oder der mehreren Betriebsmerkmale entsprechen.

8. Mining-Knoten nach einem der vorhergehenden Ansprüche, wobei die Steuerelektronik ferner so konfiguriert ist, dass sie:
- ein Abspeichern der Rohdatenstichproben in einer nicht verteilten Datenbank auslöst.

9. Mining-Knoten nach einem der vorhergehenden Ansprüche,
wobei der Vergleich auf einer vordefinierten Kennzahl mit einer Gültigkeitsdauer basiert,
wobei die eine oder die mehreren Validierungsmaßnahmen das Speichern des Vergleichsergebnisses und eines Zeitstempels des Vergleichs und der vordefinierten Kennzahl in der verteilten Datenbank umfasst.

10. Mining-Knoten nach Anspruch 9, wobei die Steuerelektronik ferner so konfiguriert ist, dass sie:
- nach Ablauf der Gültigkeitsdauer der vordefinierten Kennzahl eine Neuaushandlung der vordefinierten Kennzahl zwischen mehreren Stakeholder-Knoten auslöst.

11. Mining-Knoten nach einem der vorhergehenden Ansprüche,
wobei der Messdatensatz eine digitale Signatur der Rohdatenstichproben umfasst.

12. Computergestütztes Verfahren, das von einem Mining-Knoten (151-153) in einer Infrastruktur (150) einer verteilten Datenbank (159) ausgeführt wird und Folgendes umfasst:
- Abrufen eines von einem ersten Oracle (101) bereitgestellten Messdatensatzes (91), der ein oder mehrere Observables (85) zu einem Ereignis (81) angibt, wobei der Messdatensatz (91) verarbeitete Rohdatenstichproben umfasst,
- Durchführen eines Vergleichs zwischen dem Messdatensatz und einem Referenzdatensatz, wobei der Referenzdatensatz einen oder mehrere mit dem Ereignis (81) verknüpfte, vorgegebene Constraints (702, 711, 712) und/oder einen von einem zweiten Oracle (102) bereitgestellten, weiteren Messdatensatz (92) umfasst, der ein oder mehrere weitere Observables (86) zu dem Ereignis (81) angibt, und
- in Abhängigkeit vom Ergebnis des Vergleichs:
Auslösen eines oder mehrerer positiver Validierungsmaßnahmen (5005) für den Messdatensatz (91), wenn der Vergleich ein positives Ergebnis erbringt,
Auslösen einer oder mehrerer negativer Validierungsmaßnahmen (5006) für den Messdatensatz (91), wenn der Vergleich ein negatives Ergebnis erbringt, wobei das Auslösen der einen oder der mehreren Validierungsmaßnahmen (5006) das Auslösen eines Bereinigungsprozesses umfasst, der auf einer Vertrauensstufe des ersten Oracle (101) und einer Vertrauensstufe des zweiten Oracle (102) basiert,
wobei die eine oder die mehreren positiven Validierungsmaßnahmen (5005) und die eine oder die mehreren negativen Validierungsmaßnahmen (5006) in der verteilten Datenbank implementiert werden.

13. Verfahren nach Anspruch 12, wobei das Verfahren von dem Mining-Knoten nach einem der Ansprüche 1 bis 11 ausgeführt wird.

## Revendications

1. Noeud de minage (151-153) d'une infrastructure (150) d'une base de données distribuée (159), le noeud de minage (151-153) comprenant une circuiterie de commande (155-157) configurée pour :
- obtenir (5001) un ensemble de données de mesure (91) fourni par un premier oracle (101) indicateur d'un ou plusieurs observables (85) d'un évènement (81), l'ensemble de données de mesure (91) comprenant des échantillons de données brutes traitées,
- exécuter (5003) une comparaison entre l'ensemble de données de mesure et un ensemble de données de référence, l'ensemble de données de référence comprenant au moins l'une d'une ou plusieurs contraintes prédéfinies (702, 711, 712) associées à l'évènement (81) ou un ensemble de données de mesure supplémentaire (92) fourni par un deuxième oracle (102) qui est indicateur d'un ou plusieurs observables supplémentaires (86) de l'évènement (81), et
- en fonction d'un résultat de la comparaison :
si la comparaison produit un résultat positif, déclencher une ou plusieurs mesures de validation positives (5005) pour l'ensemble de données de mesure (91),
si la comparaison produit un résultat négatif, déclencher une ou plusieurs mesures de validation négatives (5006) pour l'ensemble de données de mesure (91), le déclenchement des une ou plusieurs mesures de validation négatives (5006) comprenant le déclenchement d'un processus de règlement, le processus de règlement étant basé sur un niveau de confiance du premier oracle (101) et sur un niveau de confiance du deuxième oracle (102),
les une ou plusieurs mesures de validation positives (5005) et les une ou plusieurs mesures de validation négatives (5006) étant mises en oeuvre au niveau de la base de données distribuée.

2. Noeud de minage selon la revendication 1, dans lequel
l'ensemble de données de mesure comprend une première géolocalisation (701),
les une ou plusieurs contraintes prédéfinies comprennent une deuxième géolocalisation (702),
la comparaison est basée sur une distance spatiale entre la première géolocalisation et la deuxième géolocalisation.

3. Noeud de minage selon la revendication 1 ou 2, dans lequel
l'ensemble de données de mesure comprend un ou plusieurs horodatages (711),
les une ou plusieurs contraintes prédéfinies comprennent une contrainte temporelle (712, 73),
la comparaison est basée sur une distance de domaine temporel entre les un ou plusieurs horodatages et la contrainte temporelle.

4. Noeud de minage selon la revendication 3, dans lequel
la contrainte temporelle comprend un taux de répétition seuil de l'évènement.

5. Noeud de minage selon l'une quelconque des revendications précédentes, dans lequel la circuiterie de commande est en outre configurée pour :
- recevoir des échantillons de données brutes de la part d'un oracle (101), et
- traiter les échantillons de données brutes, pour obtenir l'ensemble de données de mesure comprenant les échantillons de données brutes traités.

6. Noeud de minage selon la revendication 5, dans lequel
ledit traitement est basé sur un algorithme prédéfini ayant une durée de temps de validité,
les échantillons de données brutes sont sélectivement traités si un ou plusieurs horodatages des échantillons de données brutes se trouvent conformes à la durée de temps de validité de l'algorithme prédéfini,
l'ensemble de données de mesure est éventuellement associé à au moins l'un d'un horodatage dudit traitement, ou d'un indicateur indicatif de l'algorithme prédéfini, ou de la durée de temps de validité de l'algorithme prédéfini.

7. Noeud de minage selon l'une quelconque des revendications précédentes, dans lequel
l'évènement est associé à une ou plusieurs caractéristiques opérationnelles d'un dispositif de champ industriel,
les échantillons de données brutes traités correspondent à un ou plusieurs facteurs de mérite des une ou plusieurs caractéristiques opérationnelles.

8. Noeud de minage selon l'une quelconque des revendications précédentes, dans lequel la circuiterie de commande est en outre configurée pour :
- déclencher un stockage des échantillons de données brutes dans une base de données non distribuée.

9. Noeud de minage selon l'une quelconque des revendications précédentes, dans lequel
la comparaison est basée sur une mesure prédéfinie ayant une durée de temps de validité,
les une ou plusieurs mesures de validation comprennent le stockage du résultat de la comparaison dans la base de données distribuée et le stockage d'un horodatage de la comparaison dans la base de données distribuée et le stockage de la mesure prédéfinie dans la base de données distribuée.

10. Noeud de minage selon la revendication 9, dans lequel la circuiterie de commande est en outre configurée pour :
- à l'issue de l'expiration de la durée de temps de validité de la mesure prédéfinie, déclencher une renégociation de la mesure prédéfinie entre de multiples noeuds de parties prenantes.

11. Noeud de minage selon l'une quelconque des revendications précédentes, dans lequel
l'ensemble de données de mesure comprend une signature numérique des échantillons de données brutes.

12. Procédé mis en oeuvre par ordinateur exécuté par un noeud de minage (151-153) d'une infrastructure (150) d'une base de données distribuée (159), le procédé comprenant les étapes :
- obtenir un ensemble de données de mesure (91) fourni par un premier oracle (101) indicateur d'un ou plusieurs observables (85) d'un évènement (81), l'ensemble de données de mesure (91) comprenant des échantillons de données brutes traités,
- exécuter une comparaison entre l'ensemble de données de mesure et un ensemble de données de référence, l'ensemble de données de référence comprenant au moins l'une d'une ou plusieurs contraintes prédéfinies (702, 711, 712) associées à l'évènement (81) ou un ensemble de données de mesure supplémentaire (92) fourni par un deuxième oracle (102) qui est indicateur d'un ou plusieurs observables supplémentaires (86) de l'évènement (81), et
- en fonction d'un résultat de la comparaison :
si la comparaison produit un résultat positif, déclencher une ou plusieurs mesures de validation positives (5005) pour l'ensemble de données de mesure (91),
si la comparaison produit un résultat négatif, déclencher une ou plusieurs mesures de validation négatives (5006) pour l'ensemble de données de mesure (91), le déclenchement des une ou plusieurs mesures de validation négatives (5006) comprenant le déclenchement d'un processus de règlement, le processus de règlement étant basé sur un niveau de confiance du premier oracle (101) et sur un niveau de confiance du deuxième oracle (102),
les une ou plusieurs mesures de validation positives (5005) et les une ou plusieurs mesures de validation négatives (5006) étant mises en oeuvre au niveau de la base de données distribuée.

13. Procédé selon la revendication 12, dans lequel le procédé est exécuté par le noeud de minage selon l'une quelconque des revendications 1 à 11.
